# EUROPEAN PATENT SPECIFICATION

(11) **EP 0 682 176 B1**
(45) Date of publication and mention of the grant of the patent: **08.11.2000**
(21) Application number: 95107041.6
(22) Date of filing: 10.05.1995
(51) Int. Cl.: F02F 1/38, F02F 1/42

(54) **Internal combustion engine**
Brennkraftmaschine
Moteur à combustion interne

(30) Priority: 10.05.1994 JP 9677194
(43) Date of publication of application: 15.11.1995
(73) Proprietor: YAMAHA HATSUDOKI KABUSHIKI KAISHA, Iwata-shi Shizuoka-ken, 438 (JP)
(72) Inventor: Komatsu, Kenji, c/o Yamaha Hatsudoki K.K., Iwata-shi, Shizuoka-ken, 438 (JP); Takano, Tomotaka, c/o Yamaha Hatsudoki K.K., Iwata-shi, Shizuoka-ken, 438 (JP)
(74) Representative: Grünecker, Kinkeldey, Stockmair & Schwanhäusser Anwaltssozietät

(56) References cited:
- DE-A- 4 038 169
- DE-C- 675 606
- FR-A- 1 571 361
- GB-A- 2 204 094
- US-A- 2 990 819

## Description

This invention relates to an internal combustion engine comprising a cylinder block and a cylinder head fastened to said cylinder block, said cylinder head having a bottom surface for joining said cylinder block and a top surface for joining a cylinder head cover, said cylinder head being formed with an intake passage and an exhaust passage each communicating at one end thereof with a combustion chamber partially defined through the bottom surface of the cylinder head, wherein the other end of the intake passage opens at the said top surface.

Internal combustion engines are constituted by stacking and tightening together a crankcase journaling a crankshaft, a cylinder block constituting cylinder chambers accommodating pistons, a cylinder head forming combustion chambers over the cylinder chambers and having intake passages and exhaust passages communicating to the combustion chambers and intake and exhaust valves, and a head cover placed on the cylinder head.

The cylinder head usually has combustion chambers formed on its underside and intake and exhaust passages formed to extend from opposite sides to the combustion chambers.

The cylinder head described above, however, has a complicated shape because it is provided with the intake and exhaust passages, intake and exhaust valves, as described above, and further with fuel injection pumps, ignition plugs, and water jackets. Furthermore, the top, bottom, right and left sides require high machining precision which is difficult to attain because the top surface serves as a mating surface with the head cover, the bottom surface serves as a mating surface with the cylinder block, and the right and left sides serve as mating surfaces with the intake and exhaust ducts.

Such an internal combustion engine as mentioned above is known from US-A-2 990 819. This document discloses a head 37 which consists of the assembled parts 38, 39 and 41. The part 38 provides the combustion chamber into which inlet and exhaust passages 43 and 44 open. The outer ends of the passages 43 and 44 open through the end wall 51 included in the part 38. The exhaust passage 44 is adapted to communicate with the exhaust manifold 76 while the inlet passage 43 is adapted to communicate with a branch 77 of an inlet manifold 78.

A further reference FR-A-1 571 361 discloses a cylinder head having an intake passage 15 opening at the top surface of the cylinder head 11. Moreover, this document discloses an exhaust passage 21 extending from a combustion chamber in the direction of arrow "x₂" towards a vertical side portion of the cylinder head. However, there is no clear teaching in the description and the drawings on details of said exhaust passage, in other words, it remains unclear where exactly this exhaust passage terminates.

The arrangement according to US-A-2 990 819 requires the exhaust manifold 76 and the intake branch 77 to be arranged closely aside each other. Apart from the fact that the hot exhaust manifold may heat up intake air streaming through the branch 77, this arrangement appears to be disadvantageous with respect to design freedom of said manifolds which limits the size and shape of the intake branch as well as the exhaust manifold.

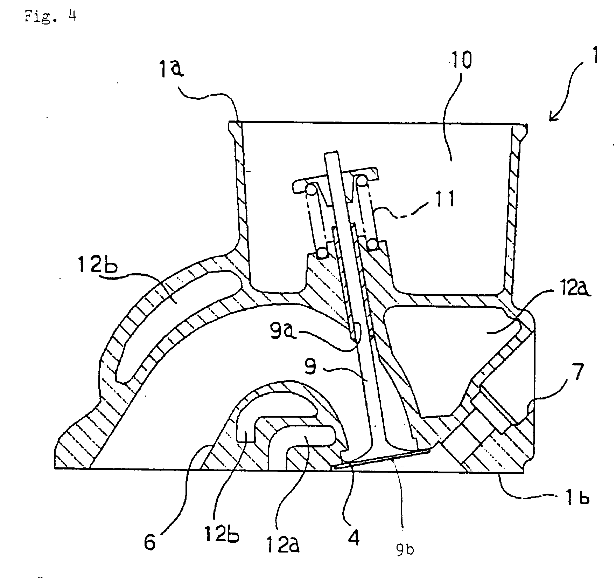

Another reference DE-A1-4 038 169 discloses a cylinder block and cylinder head but however is silent on the details of the intake and exhaust passages. Even though figure 4 shows an outwardly directed opening of the exhaust passage which is provided at the bottom side of the cylinder head, figure 4 fails to disclose any clear teaching on the corresponding opening of the intake passage. However, there is no clear teaching regarding the orientation of the intake passage and in particular its outwardly extending opening.

Accordingly, the objective of the present invention is to provide an internal combustion engine of the type as defined in the preamble portion of claim 1, which has an improved cylinder head structure providing a large design freedom for the intake and exhaust branches which are to be connected therewith and which avoid unwanted heat transfer between the exhaust and intake ducts while maintaining a structure which can be easily machined and which allows inexpensive manufacturing.

According to the present invention, this objective is performed in that the other end of the exhaust passage opens at said bottom surface and is provided with a fixing surface to which an exhaust manifold is attached.

Accordingly, only the top and bottom surfaces of the cylinder head have to be machined, since only these two surfaces of the cylinder head are to be connected to other components of the engine, while machining of the other surfaces of the cylinder head, particular right and left side surfaces, can be omitted as high precision is not required.

According to a preferred embodiment of the present invention, the cylinder head is provided with at least one coolant jacket for circulating coolant through the cylinder head, wherein preferably the or each coolant jacket has an inlet opening and an outlet opening located at the top surface and/or the bottom surface, respectively. As a result, the or each coolant jacket can be connected with other portions of the coolant circuit, for example a cylinder block coolant jacket, via the bottom or top surface of the cylinder head and no other surfaces of the cylinder head have to be machined.

In another preferred embodiment of the present invention, a cylinder head cover is provided having a coolant jacket communicated with the cylinder head coolant jacket via the opening thereof formed in the top surface of the cylinder head.

The cylinder head cover may also be provided with a fuel supply passage for supplying fuel to a fuel injection device, wherein preferably the fuel supply passage and the coolant jacket of the cylinder head cover have connecting openings arranged at a common flange portion of the head cover. On the one hand, the number of components is reduced, since the fuel supply passage is formed in the head cover and moreover the assembly of the cylinder head structure and the engine is simplified.

According to still another preferred embodiment of the present invention a or said cylinder head cover is formed with an intake passage connected with the intake passage of the cylinder head and a tumble and/or swirl control valve is disposed ion said head cover intake passage for controlling the flow pattern of the flow of intake air. That permits to adapt the flow conditions and the flow pattern of the flow of intake air to the engine operating conditions so as to improve engine performance over a wide range of operating conditions.

Further preferred embodiments of the present invention are laid down in further dependent claims.

Hereinafter, the present invention is illustrated and explained in greater detail by means of preferred embodiments of the invention in conjunction with accompanying drawings, wherein:
Fig. 1 is a schematic plan view of a cylinder head of an internal combustion engine according to a preferred embodiment of the present invention;
Fig. 2. shows the cylinder head in a cross-sectional view taken along the line A-A in fig. 1;
Fig. 3 shows the cylinder head of the preceding figs. 1 and 2 in a cross-sectional view taken along the line B-B in fig. 1, wherein an intake passage communicated with a combustion chamber and controlled by an intake valve opens onto the top surface of the cylinder head;
Fig. 4 shows the cylinder head according to the embodiment of the preceding figs. in a cross-sectional view along the line C-C in fig. 1, wherein a exhaust passage is opened and closed by an exhaust valve and opened onto the bottom surface of the cylinder head;
Fig. 5 is a schematic bottom view of the cylinder head shown in fig. 1;
Fig. 6(a) is a schematic plan view of the cylinder head connected with a cylinder head cover and a pair of intake ducts according to the embodiment of the preceding figs.;
Fig. 6(b) is a view of a flange portion of the cylinder head cover as seen in the direction of the arrow E in fig. 6(a);
Fig. 7 shows the cylinder head, the cylinder head cover and the intake ducts in a cross-sectional view taken along the line D-D in fig. 6;
Fig. 8 shows a cylinder head of an internal combustion engine according to another embodiment of the invention in a schematic cross-sectional view taken through an intake passage of the cylinder head which is connected to a head cover and a cylinder block receiving a piston;
Fig. 9 is a schematic structural plan view of the cylinder head structure according to the embodiment of fig. 8 and shows the positional relationship between a tumble and/or swirl control valve and the intake passages;
Fig. 10 is a schematic cross-sectional view of an internal combustion engine according to another embodiment of the present invention, wherein the engine is arranged in an engine compartment of a vehicle and an intake duct of the engine extends upwardly from the intake passage and is then arched downwards and connected to a search tank disposed opposite to the exhaust side of the engine;
Fig. 11 is a cross-sectional view similar to fig. 10 showing another embodiment of an internal combustion engine arranged in an engine compartment of a vehicle;
Fig. 12 is a cross-sectional view of an internal combustion engine according to still another embodiment of the present invention, wherein an intake duct is smoothly curved in parallel with an engine hood defining an engine compartment of a vehicle;
Fig. 13 is a cross-sectional view similar to the preceding figs. 10 to 12 of an internal combustion engine according to another embodiment of the invention, wherein the intake duct and the exhaust duct of the engine are arched towards the same side of the internal combustion engine mounted in an engine compartment of a vehicle;
Fig. 14(a) is a schematic partial bottom view of a cylinder head of an internal combustion engine according to another embodiment of the invention, wherein the positions of intake and exhaust ports are shown when intake and exhaust valves are arranged at different angles;
Fig. 14(b) is a view showing the positional relationship between the intake and exhaust valves according to the embodiment of fig. 14(a);
Fig. 14(c) is a view showing the positional relationship between intake and exhaust valves according to another embodiment of the invention.

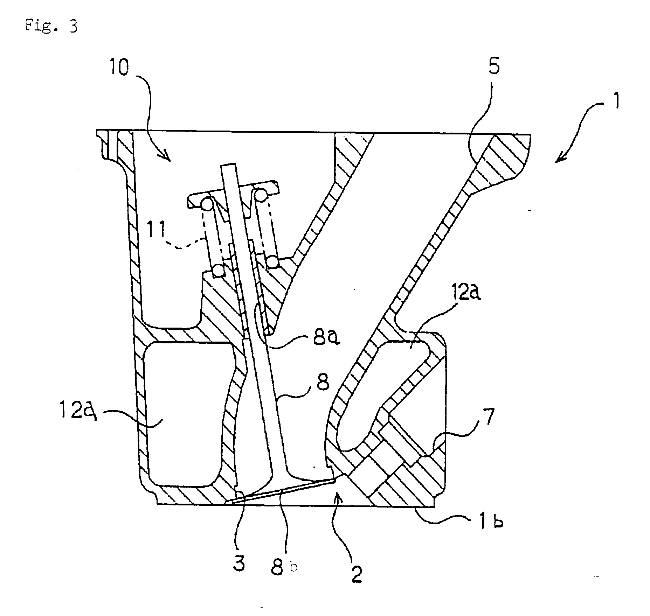

A cylinder head 1 is provided on its bottom surface 1b with two combustion chambers 2 for use in two-cylinder internal combustion engines. Each combustion chamber 2 is provided with an intake port 3 and an exhaust port 4. An intake passage 5 is formed to extend from the intake port 3 upward. The upper end of the intake passage 5 is open to the top surface 1a of the cylinder head 1 (see Fig. 3). An exhaust passage 6 is formed to extend from the exhaust port 4 first upward and then arching downward and open to the bottom surface 1b of the cylinder head 1 (see Fig. 4). As shown in Figs. 3 and 4, holes 7 are formed at positions respectively corresponding to the intake and exhaust ports 3 and 4 for attaching ignition plugs (not shown). The intake and exhaust passages 5 and 6 are respectively formed at their middle points with guide holes 8a and 9a for attaching an intake valve 8 and an exhaust valve 9. The ends of the intake valve 8 and the exhaust valve 9 have respectively a valve disc 8b and a valve disc 9b extending into the combustion chambers 2, and their other ends extend through the guide holes 8a and 9a into a cam chamber 10. The intake and exhaust valves 8 and 9 are normally forced upward or toward closing direction by respective springs 11 and forced at specified time intervals downward by the action of cams (not shown) to open the intake and exhaust ports 3 and 4.

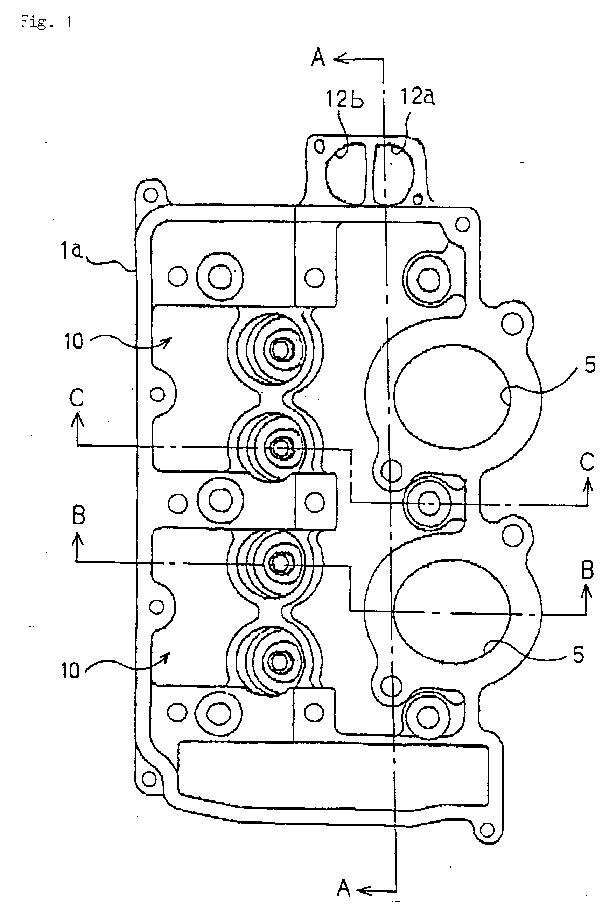

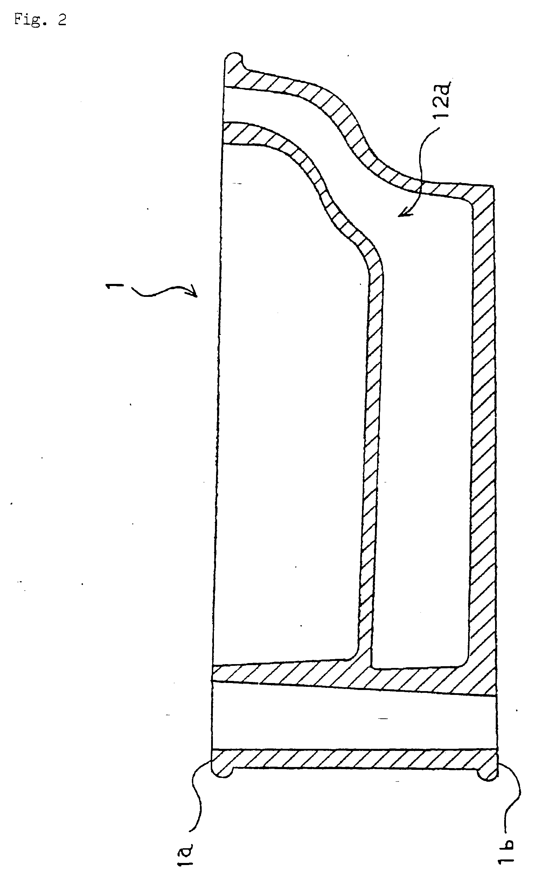

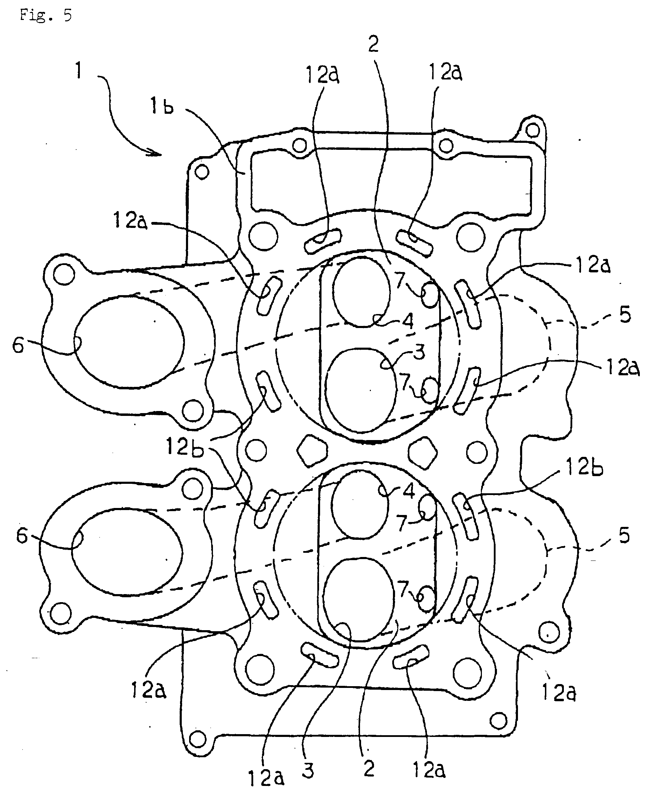

Two water jackets, the first water jacket 12a for cooling the intake passage 5 and the second water jacket 12b for cooling the exhaust passage, are formed in the cylinder head 1. The water jackets 12a and 12b extend over the entire cylinder head 1 (See FIGs. 1 and 2) to cool the intake and exhaust passages 5 and 6, and one end of each of them is open to the top surface of the cylinder head 1, while the other end is open to the bottom surface 1b of the cylinder head 1 (See FIG. 5). Cooling water flows through water jackets (not shown) formed in a cylinder block (not shown), cools cylinder chambers (not shown), flows through an opening located at the bottom surface 1b of the cylinder head 1 to the water jackets 12a and 12b in the cylinder head 1, cools the intake and exhaust passages 5 and 6, and flows from an opening located at the top surface 1a of the cylinder head 1 to a water jacket (not shown) formed in a head cover (not shown). The amounts of water flowing through the first and second water jackets 12a and 12b are controlled by a controller (not shown) so that more cooling is provided to the exhaust passage 6 than to the intake passage 5.

The cylinder head 1 constituted as described above is joined to a head cover (not shown) and a cylinder block (not shown) through appropriate seal members (not shown) using the top and bottom surfaces 1a and 1b as mating surfaces.

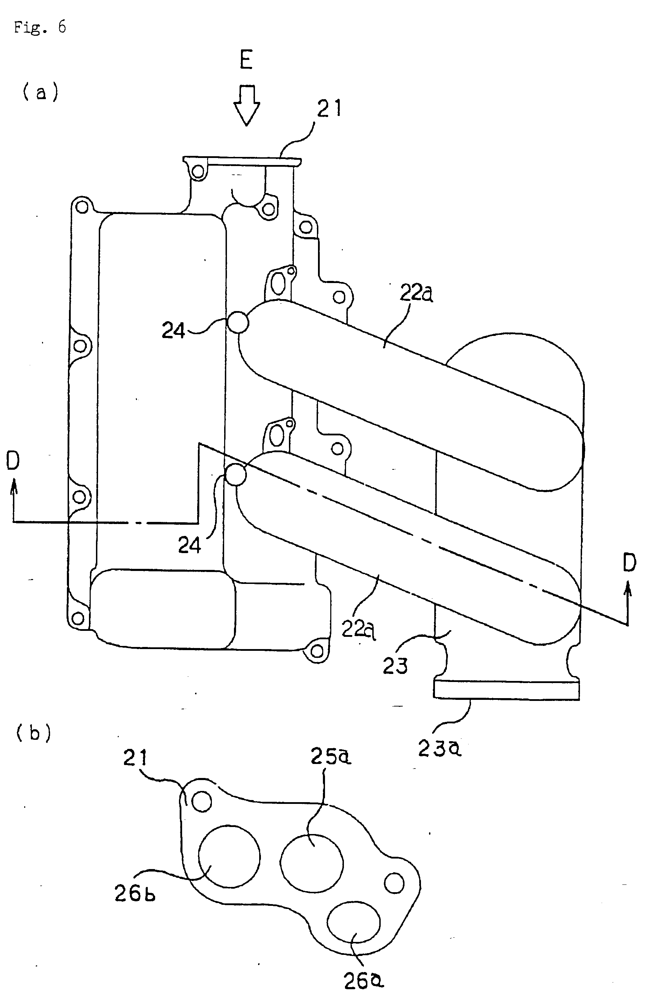

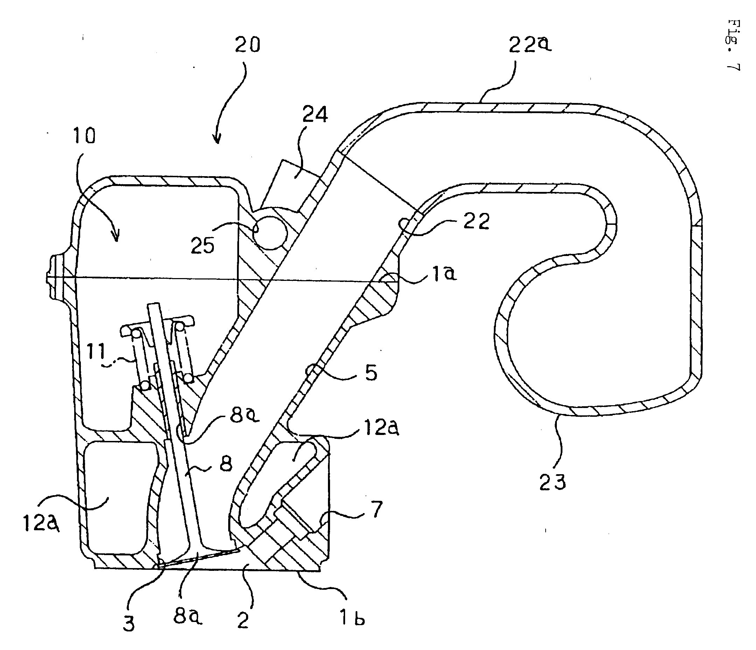

FIGs. 6 and 7 are explanatory drawings of the cylinder head 1 to which a head cover 20 is attached. FIG. 6(a) is a schematic plan view of the cylinder head 1 to which the head cover 20 is attached. FIG. 6(b) is a view of the flange portion 21 of the head cover 20 as seen in the direction of the arrow E.
FIG. 7 shows a cross section taken along the line D-D in FIG. 6.

As shown in the drawings, two intake passages 22 respectively corresponding to the combustion chambers 2 are formed in the head cover 20, and connected through intake passages 22a to a common surge tank 23. The surge tank 23 is connected through its flange portion 23a to an air cleaner (not shown) through a suitable connection duct (not shown).

The head cover 20 is provided with fuel injection devices 24 for injecting fuel into the intake passages 5 and 22. A fuel supply passage 25 is provided for supplying fuel to the fuel injection device 24 in the direction of the drawing surface of FIG. 6(a). One end of the fuel supply passage 25 is open as an opening 25a to the flange portion 21 of the head cover 20. The opening 25a is connected through a suitable fuel supply duct (not shown) to a fuel tank (not shown).

In the head cover 20 are further formed water jackets 26a and 26b with each one end of them opening to positions corresponding to the opening of the water jacket 12 located at the top surface 1a of the cylinder head 1. Each of the other ends of the water jackets 26a and 26b is also open to the flange portion 21 of the head cover 20.

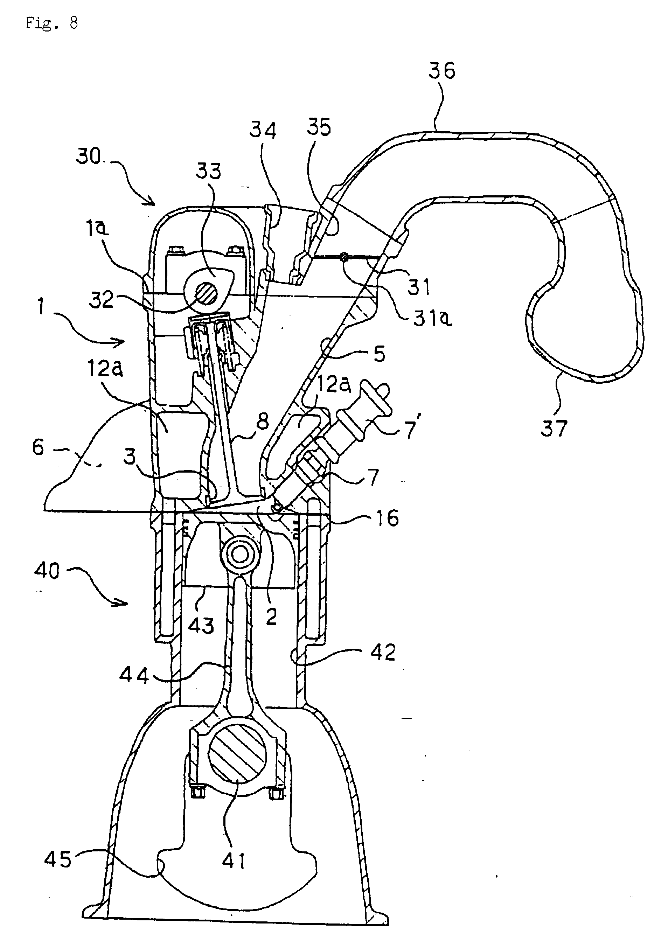

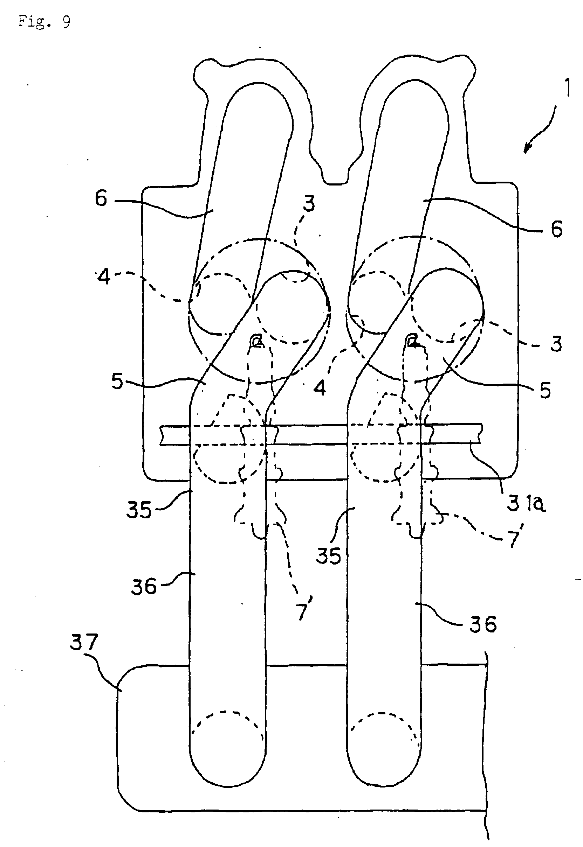

FIGs. 8 and 9 show the state of the cylinder head 1 connected to a head cover 30 and a cylinder block 40. FIG. 8 shows a schematic cross section around the intake passage 5. FIG. 9 is a schematic structural drawing showing positional relationship between the intake passage 5 and a tumble swirl control valve 31 (hereinafter abbreviated as TSC valve 31) which will be described later.

In FIG.8 are shown a camshaft 32, a cam 33 which opens and closes an intake valve 8. The camshaft 32 is journaled in the head cover 30 so as to rotate in interlocked motion with a crankshaft 41.

A fuel injection device mounting hole 34 is also shown in FIG.8. One end of this injection device mounting hole 34 is open to the intake passage 5. The hole 34 is inclined so that the fuel injection device (shown without a reference symbol) can inject fuel toward the intake hole 3.

Two intake passages 35 are formed in the head cover 30 with each one end of them connected to the intake passage 5 of the cylinder head 1 and with each other end of them connected to each of two connection ducts 36. The two connection ducts 36 are connected to a common surge tank 37. Air is supplied through the surge tank 37 and an air cleaner (not shown).

Each of the two intake passages 35 of the head cover 30 is provided with a TSC valve 31. The TSC valve 31 is formed as shown in FIG. 9 in the shape of a truncated disk to change flow of air taken into the combustion chamber by opening and closing the intake passage 35 by rotating a shaft 31a. In other words, when the TSC valve 31 is open, air passes through the entire section of the intake passage 35 and when the TSC valve 31 is closed, air goes through only the truncated section so that inflow angle of air drawn into the combustion chamber 2 is changed.

A cylinder block 40 is attached to the bottom of the cylinder head 1 through a suitable seal member (not shown) and using suitable connection members such as bolts (not shown). In the cylinder block 40 are formed cylinder chambers 42. A piston 43 is inserted in the cylinder chamber 42 for free vertical sliding, and is connected through a connecting rod 44 to a crankshaft 41. A weight 45 and an ignition plug 7' are also shown in the drawing.

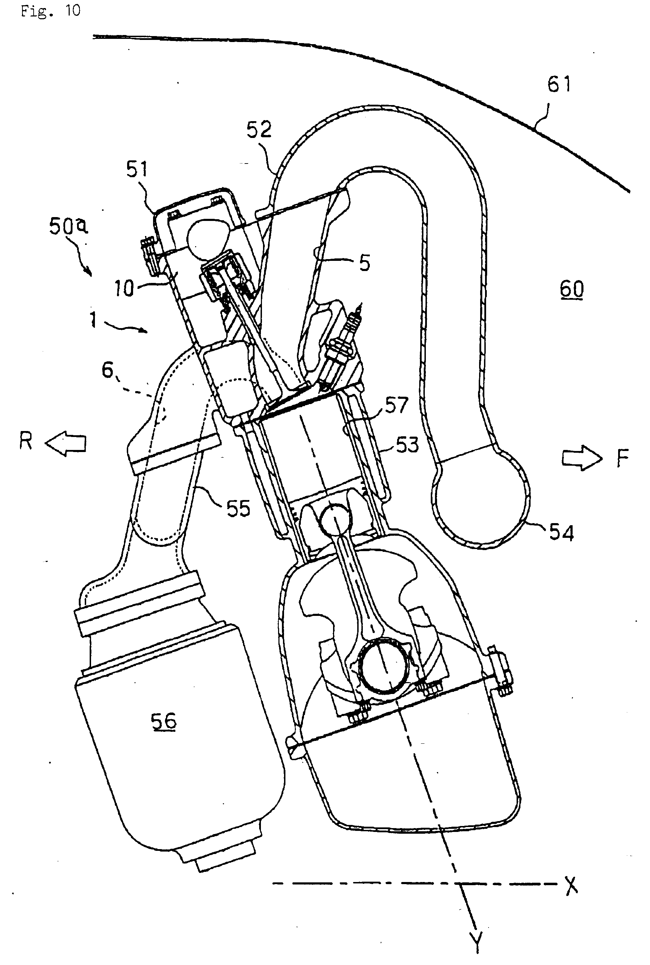

FIGs. 10 through 13 respectively show engines 50a, 50b, and 50c using the above cylinder head 1 and mounted on a vehicle.

The engine 50a shown in FIG. 10 is constituted with a cylinder head 1 to the top surface of which is attached a head cover 51, with an intake duct 52 attached to the intake passage 5.

The intake duct 52 extends first upward and then arches smoothly downward to approach a cylinder block 53 located below the cylinder head 1 and connected to a surge tank 54. The exhaust passage 6 of the cylinder head 1 is connected to an exhaust duct 55 which in turn is connected to a catalytic converter 56.

The engine 50a constituted as described above is mounted in an engine compartment 60 of a vehcle so that the intake duct 52 and the surge tank 54 face forward (arrow F) of the vehicle, the exhaust duct 55 and the catalytic converter 56 face rearward (arrow R), and that a center line Y of the cylinder chamber 57 is tilted rearward relative to a horizontal line X of the vehicle.

The numeral 61 in the drawing denotes an engine hood or bonnet 61.

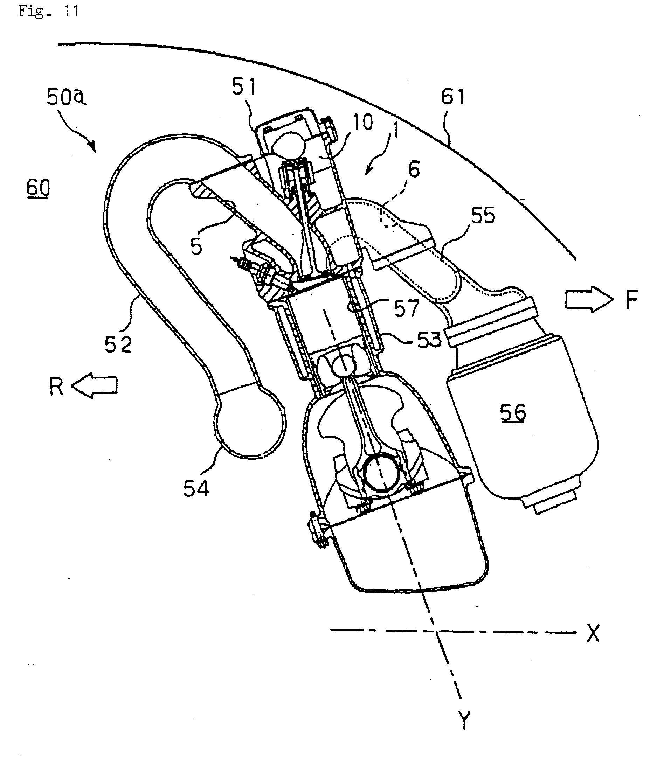

FIG. 11 shows the same engine 50a arranged differently from FIG. 10. The engine 50a is mounted in the engine compartment 60 with the exhaust duct 55 and the catalytic converter 56 facing forward (arrow F) of the vehicle, and the intake duct 52 and the surge tank 54 facing rearward (arrow R). In this case, the engine 50a is located further forward (arrow F) of the vehicle in comparison with the arrangement shown in FIG. 10 with further tilting rearward (arrow R) of the center line Y of the cylinder chamber 57 relative to the horizontal line X of the vehicle so as to avoid interference with the engine hood 61.

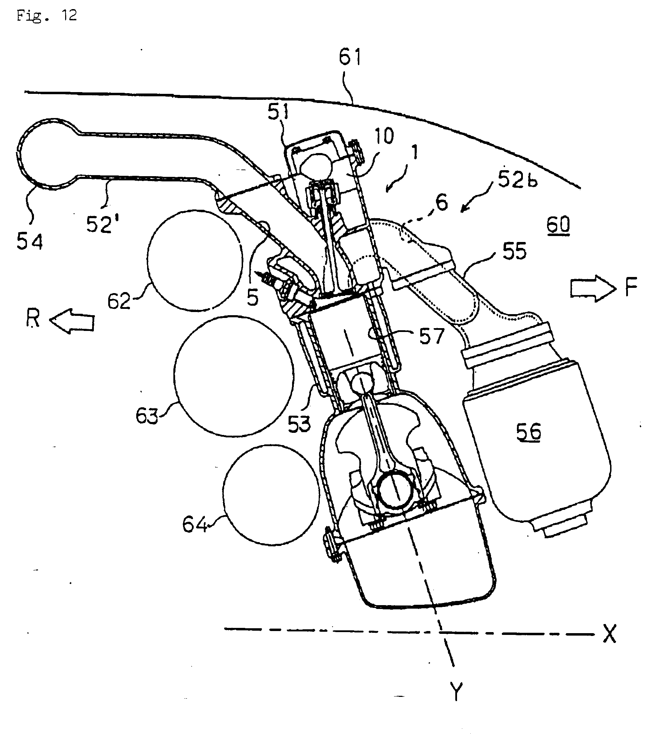

The engine 50b shown in FIG. 12 is the same with the engine 50a shown in FIGs. 10 and 11, except the structure of an intake duct 52' is different.

Similarly to the engine arrangement shown in FIGs. 10 and 11, the engine 50b is also arranged that the center line Y of the cylinder chamber 57 is tilted rearward (arrow R), to avoid interference with the engine hood 61, of th vehicle relative to the horizontal line X of the vehicle and mounted in the forward part (arrow F) of the vehicle. The intake duct 52' extends rearward in parallel to the engine hood 61. Auxiliary devices such as pump 62 for power steering, an alternator 63, and airconditioner pump 64 are arranged below the intake duct 52' so that they are arranged one above another along the engine 50b.

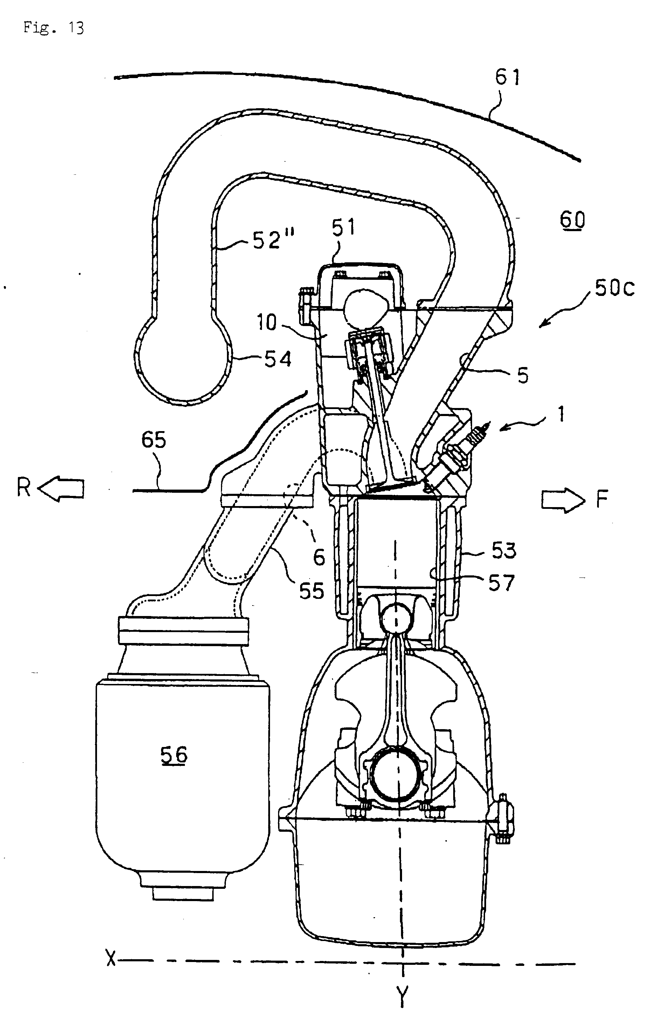

The engine 50c shown in FIG. 13 is the same with the engines 50a and 50b shown in FIGs. 10 through 12, except the structure of the intake duct 52'' is different.

The intake duct 52'' of th engine 50c extends first upward, above around the head cover 51 and then downward to approach the exhaust duct 55. To avoid overheating of intake air, a shroud 65 is placed between the surge tank 56 and the exhaust duct 55. By extending the intake duct 52'' to approach the exhaust duct 55 as described above, the dimension of the engine in the longitudinal direction of the vehicle can be made smaller than that of the other engines 50a and 50b.

The engine 50c described above is mounted in the engine compartment 60 so that the center line Y of the cylinder chamber 57 is at right angles to the horizontal line X of the vehicle.

While two ignition plugs 7' and 7' per combustion chamber are used as described above for the present embodiment, the number of the ignition plugs is not limited to two but any number of plugs may be used in any positions, or only one plug may be used per combustion chamber as long as combustion efficiency is good. When only one plug is used per combustion chamber, however, it is a matter of course for favorable combustion efficiency that the plug be located more toward the center of the combustion chamber than the position of the ignition plug of the present embodiment.

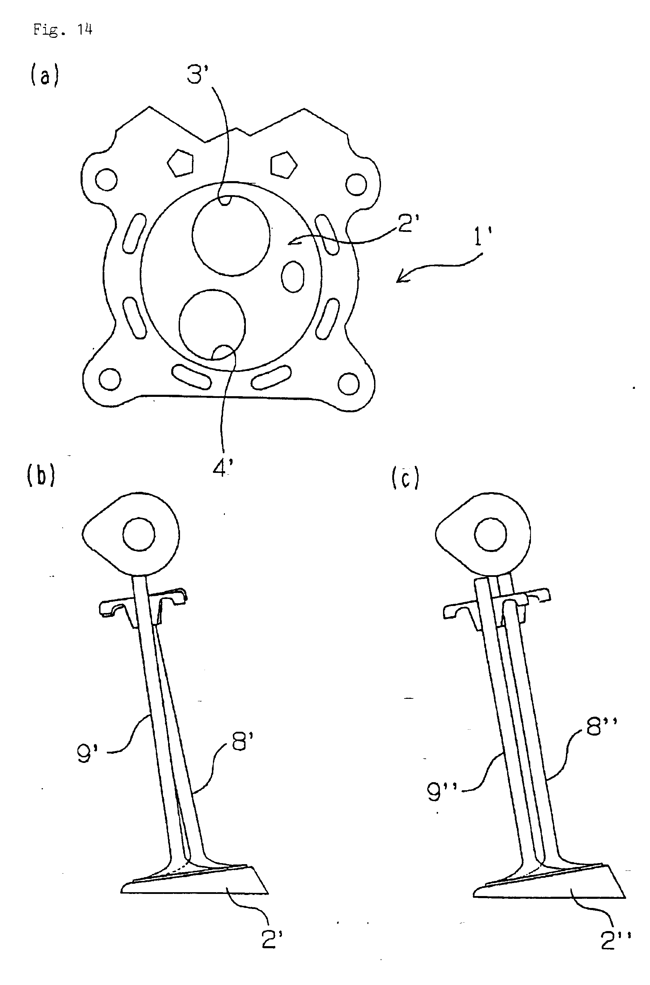

While the intake valve 8 and the exhaust valve 9 are arranged parallel to each other in the present embodiment, the mutual angle of the valves is not limited to parallel but they may be arranged at different angles each other, for example as shown in FIG. 14. FIG. 14(a) is a schematic bottom view of a cylinder block 1', showing positions of, an intake port 3' and an exhaust port 4' with an intake valve 8' and an exhaust valve 9' arranged at different angles. FIG. 14(b) is a drawing showing the positional relationship between the intake and exhaust valves 8' and 9'. As shown in FIG. 14(a), the intake port 3' and the exhaust port 4' in the combustion chamber 2' are shifted according to the intake valve 8' and the exhaust valve 9'. Though not shown in the drawing, the angles of the intake passage and exhaust passage formed in the cylinder head 1' relative to the combustion chamber 2' are different according to the angles of the intake valve 8' and exhaust valve 9' from the angles of the intake passage 8 and the exhaust passage 9 of the cylinder 1 shown in FIG. 1 as a matter of course, the angle of air flowing into the combustion chamber 2' is also different and, as a matter of course, state of occurrence of tumble flow and swirl flow are also different. Therefore, the angle of the intake valve 8' can be preferably set according to tumble flow and swirl flow required in the combustion chamber 2'.

FIG. 14(c) is a further different arrangement of the intake valve 8'' and the exhaust valve 9''. In this case, the intake and exhaust valves 8'' and 9'' are parallel to each other but shifted from each other in front and rear directions by a small amount.

While this embodiment is described with the example of the cylinder head 1 applied to a two-cylinder, four-valve engine, the engine to which the cylinder head for internal combustion engines according to this invention is applied is not limited to this embodiment but the cylinder head may be applied, as a matter of course, to any engines irrespective of the number of cylinders or valves as long as each one end of the intake passages is open to the top or bottom surface and each one end of the exhaust passages is open to the bottom surface of the cylinder head 1 and is provided with a fixing surface to which an exhaust duct is attached.

With the cylinder block 1 of this embodiment described above, since the end of the intake passage 5 on the side opposite the combustion chamber 2 is open to the top surface of the cylinder block 1, intake ducts made as intake passages 22 and 35 are integrated with the head covers 20 and 30 stacked and connected to the cylinder block 1 to reduce the number of components in comparison with conventional engines.

Also, since the fuel supply passage 25 of this embodiment is formed in the head cover 20, the number of components is smaller than that of the conventional engines and provides an effect of simplified assembly. Furthermore in this embodiment, since one end of the intake passage 5 is open to the top surface of the cylinder block 1 and one end of the exhaust passage 6 is open to the bottom surface of the cylinder block 1, the intake ducts 36 and 52, and the exhaust duct 55 can be routed smoothly with a greater degree of layout freedom than in conventional cylinder blocks. As a result, the engine assembly becomes more compact and degree of freedom in mounting on the vehicle is increased.

Since the cylinder head having the combustion chamber formed on its bottom surface, the bottom surface joined to the cylinder block, and the top-surface joined to the cylinder-head is configured so that each one end of the intake and exhaust passages is open to either top or bottom surface of the cylinder head, mating surfaces with other components are limited to the top and bottom surfaces. This provides the effect of eliminating the need for high precision machining on the side surfaces, or further omitting the machining on the side surfaces.

## Claims

1. Internal combustion engine comprising a cylinder block (40,53) and a cylinder head (1) fastened to said cylinder block (40,53), said cylinder head (1) having a bottom surface (1b) for joining said cylinder block (40,53) and a top surface (1a) for joining a cylinder head cover (20,30,51), said cylinder head (1) being formed with an intake passage (5) and an exhaust passage (6) each communicating at one end thereof with a combustion chamber (2) partially defined through the bottom surface (1b) of the cylinder head (1), wherein the other end of the intake passage (5) opens at the said top surface (1a),
**characterized in that**
the other end of the exhaust passage (6) opens at said bottom surface (1b) and is provided with a fixing surface to which an exhaust manifold is attached.

2. Internal combustion engine according to claim 1, **characterized in that** the cylinder head (1) is provided with at least one coolant jacket (12a,12b) for circulating coolant through the cylinder head (1).

3. Internal combustion engine according to claim 2, **characterized in that** said or each coolant jacket (12a,12b) has an inlet opening and an outlet opening located at the top surface (1a) and/or the bottom surface (1b), respectively.

4. Internal combustion engine according to at least one of claims 1 to 3, **characterized in that** two separate cooling jackets (12a,12b) are provided for cooling the exhaust side and the intake side of the cylinder head (1) separately, said cooling jackets (12a,12b) extending across the cylinder head (1) from one side to the opposite side thereof.

5. Internal combustion engine according to claim 3 or 4, **characterized in that** the inlet opening of said or each coolant jacket (12a,12b) is disposed on the bottom surface (1b) and communicated with a cylinder block coolant jacket, while the outlet opening is disposed on the top surface (1a) of the cylinder head (1).

6. Internal combustion engine according to at least one of claims 2 to 5, **characterized by** a cylinder head cover (20) being provided with a coolant jacket (26a,26b) communicated with the cylinder head coolant jacket (12a,12b) via the opening thereof formed in the top surface (1a) of the cylinder head (1).

7. Internal combustion engine according to at least one of claims 1 to 6, **characterized in that** a cylinder head cover (20) or that said cylinder head cover (20) is provided with a fuel supply passage (25) for supplying fuel to a fuel injection device (24).

8. Internal combustion engine according to claim 7, **characterized in that** the fuel supply passage (25) and the coolant jacket of the cylinder head cover (20) have connecting openings (25a;26a,26b) arranged at a common flange portion (21) of the head cover (20).

9. Internal combustion engine according to at least one of claims 1 to 8, **characterized in that** a or said cylinder head cover (30) is formed with an intake passage (35) connected with the intake passage (5) of the cylinder head (1), and a tumble and/or swirl control valve (31) is disposed in said head cover intake passage (35) for controlling the flow pattern of the flow of intake air.

10. Internal combustion engine according to at least one of claims 7 to 9, **characterized in that** the fuel injection device (24) comprises a fuel injection valve mounted on a or said head cover (30) for spraying fuel into the intake passage (5,35) formed in the cylinder head (1) and the head cover (30) respectively.

11. Internal combustion engine according to at least one of claims 1 to 10, **characterized by** an intake valve (8) and an exhaust valve (9) for controlling the communication of the intake passage (5) and the exhaust passage (6) with the combustion chamber (2).

12. Internal combustion engine according to claim 11, **characterized in that** said intake valve (8) and said exhaust valve (9) are disposed in a common plane.

13. Internal combustion engine according to claim 11 or 12, **characterized in that** said intake valve (8) and said exhaust valve (9) are inclined towards the same side with respect to a plane containing the longitudinal cylinder bore axis.

14. Internal combustion engine according to at least one of claims 1 to 13, **characterized in that** the openings of the intake passage (5) and the exhaust passage (6) on the top surface (1a) and the bottom surface (1b), respectively, are disposed on opposite sides of the cylinder head (1) with respect to a plane containing the longitudinal cylinder bore axis.

15. Internal combustion engine according to at least one of claims 1 to 14, **characterized in that** an intake duct (52;52';52'') communicating with the intake passage (5) extends upwardly from the intake passage (5) and is then arched downward and connected to a surge tank (54).

16. Internal combustion engine according to claim 15, **characterized in that** the intake duct (52;52') is arched towards a side of the cylinder head (1) opposite to the exhaust passage (6).

17. Internal combustion engine according to claim 15, **characterized in that** the intake duct (52'') is arched towards the same side of the cylinder head (1) as the exhaust passage (6) and extends over the cylinder head cover (51).

## Patentansprüche

1. Brennkraftmaschine mit einem Zylinderblock (40,53) und einem Zylinderkopf (1), der an dem Zylinderblock (40,53) befestigt ist, wobei dieser Zylinderkopf (1) eine untere Oberfläche (1b) zur Verbindung mit diesem Zylinderblock (40,43) sowie eine obere Oberfläche (1a) zur Verbindung mit einem Zylinderkopfdeckel (20,30,51) aufweist, dieser Zylinderkopf (1) mit einem Einlasskanal (5) und einem Auslasskanal (6) ausgeformt ist, wobei jeder mit einem Ende davon mit einer Brennkammer (2) kommuniziert, die teilweise durch die untere Oberfläche (1b) von dem Zylinderkopf (1) festgelegt ist, worin das andere Ende von dem Einlasskanal (5) sich in die obere Oberfläche (1a) hinein öffnet, **dadurch gekennzeichnet,** dass das andere Ende von dem Auslasskanal (6) sich bei der unteren Oberfläche (1b) öffnet und mit einer Befestigungsoberfläche versehen ist, an welcher ein Ausgleichskrümmer angeschlossen ist.

2. Brennkraftmaschine nach Anspruch 1, **dadurch gekennzeichnet,** dass der Zylinderkopf (1) mit mindestens einem Kühlmantel (12a,12b) versehen ist zum Zirkulieren von Kühlmittel durch den Zylinderkopf (1).

3. Brennkraftmaschine nach Anspruch 2, **dadurch gekennzeichnet,** dass dieser oder jeder Kühlmantel (12a,12b) eine Einlassöffnung und eine Auslassöffnung aufweisen, die an der oberen Oberfläche (1a) und/oder der unteren Oberfläche (1b) entsprechend angeordnet ist.

4. Brennkraftmaschine nach zumindest einem der Ansprüche 1 bis 3, **dadurch gekennzeichnet,** dass zwei separate Kühlmäntel (12a,12b) für die Kühlung der Auslaßseite und der Einlaßseite von dem Zylinderkopf (1) separat ausgebildet sind, wobei diese Kühlmäntel (12a,12b) sich über den Zylinderkopf (1) von einer Seite zu der entgegengesetzten Seite davon erstrecken.

5. Brennkraftmaschine nach Anspruch 3 oder 4, **dadurch gekennzeichnet,** dass die Einlassöffnung von diesem oder jedem Kühlmantel (12a,12b) an der unteren Oberfläche (1b) angeordnet ist und mit einem Zylinderblockkühlmantel kommuniziert, während die Auslassöffnung an der oberen Oberfläche (1a) von dem Zylinderkopf (1) angeordnet ist.

6. Brennkraftmaschine nach zumindest einem der Ansprüche 2 bis 5, **gekennzeichnet durch** einen Zylinderkopfdeckel (20), der mit einem Kühlmantel (26a,26b) versehen ist, der mit dem Zylinderkopfkühlmantel (12a,12b) über eine Öffnung davon kommuniziert, die in der oberen Oberfläche (1a) von dem Zylinderkopf (1) ausgebildet ist.

7. Brennkraftmaschine nach zumindest einem der Ansprüche 1 bis 6, **dadurch gekennzeichnet,** dass ein Zylinderkopfdeckel (20), oder dass dieser Zylinderkopfdeckel (20) mit einer Kraftstoffzuführleitung (25) versehen ist zum Zuführen von Kraftstoff zu einer Kraftstoffeinspritzeinrichtung (24).

8. Brennkraftmaschine nach Anspruch 7, **dadurch gekennzeichnet,** dass die Kraftstoffzuführleitung (25) und der Kühlmantel von dem Zylinderkopfdeckel (20) Verbindungsöffnungen (25a;26a,26b) aufweisen, die bei einem gemeinsamen Flanschabsehnitt (21) von dem Kopfdeckel (20) angeordnet sind.

9. Brennkraftmaschine nach zumindest einem der Ansprüche 1 bis 8, **dadurch gekennzeichnet,** dass ein oder dieser Zylinderkopfdeckel (30) mit einem Einlasskanal (35) ausgebildet ist, der mit dem Einlasskanal (5) von dem Zylinderkopf (1) verbunden ist, und dass ein Taumel- und/oder Wirbelsteuerventil (31) in diesem Einlasskanal (35) des Kopfdeckels angeordnet ist zur Steuerung des Fliessmusters von dem Fluss der Ansaugluft.

10. Brennkraftmaschine nach zumindest einem der Ansprüche 7 bis 9, **dadurch gekennzeichnet,** dass die Kraftstoffeinspritzeinrichtung (24) ein Kraftstoffeinspritzventil enthält, das an einem oder diesem Kopfdeckel (30) montiert ist zum Einspritzen von Kraftstoff in die Einlassleitung (5,35), die in dem Zylinderkopf (1) bzw. in dem Kopfdeckel (30) ausgebildet ist.

11. Brennkraftmaschine nach zumindest einem der Ansprüche 1 bis 10, **gekennzeichnet durch** ein Einlassventil (8) und ein Auslassventil (9) zur Steuerung der Kommunikation des Einlasskanals (5) und des Auslasskanals (6) mit der Brennkammer (2).

12. Brennkraftmaschine nach Anspruch 11, **dadurch gekennzeichnet,** dass dieses Einlassventil (8) und dieses Auslassventil (9) in einer gemeinsamen Ebene angeordnet sind.

13. Brennkraftmaschine nach Anspruch 11 oder 12, **dadurch gekennzeichnet,** dass dieses Einlassventil (8) und dieses Auslassventil (9) in Richtung der gleichen Seite bezüglich einer Ebene geneigt sind, die die longitudinale Zylinderbohrungsachse enthält.

14. Brennkraftmaschine nach zumindest einem der Ansprüche 1 bis 13, **dadurch gekennzeichnet,** dass die Öffnungen in dem Einlasskanal (5) und in dem Auslasskanal (6) in der oberen Oberfläche (1a) bzw. der unteren Oberfläche (1b) an einander entgegengesetzten Seiten von dem Zylinderkopf (1) bezüglich einer Ebene angeordnet sind, die die longitudinale Zylinderbohrungsachse enthält.

15. Brennkraftmaschine nach zumindest einem der Ansprüche 1 bis 14, **dadurch gekennzeichnet,** dass ein Einlassrohr (52;52';52''), das mit dem Einlasskanal (5) kommuniziert, sich aufwärts von dem Einlasskanal (5) erstreckt und dann nach unten gebogen ist und an einem Druckausgleichsbehälter (54) angeschlossen ist.

16. Brennkraftmaschine nach Anspruch 15, **dadurch gekennzeichnet,** dass das Einlassrohr (52:52') in Richtung auf eine Seite des Zylinderkopfes (1) gebogen ist, die entgegengesetzt des Auslasskanals (6) liegt.

17. Brennkraftmaschine nach Anspruch 15, **dadurch gekennzeichnet,** dass das Einlassrohr (52'') zur gleichen Seite des Zylinderkopfes (1) gekrümmt ist wie der Auslasskanal (6) und sich über den Zylinderkopfdeckel (51) erstreckt.

## Revendications

1. Moteur à combustion interne comprenant un bloc-cylindres (40, 53) et une culasse (1) fixée audit bloc-cylindres (40, 53), ladite culasse (1) comportant une surface inférieure (1b) pour s'unir audit bloc-cylindres (40, 53) et une surface supérieure (1a) pour s'unir à un couvre-culbuteurs (20, 30, 51), ladite culasse (1) comportant un passage d'admission (5) et un passage d'échappement (6) communiquant chacun à une de leurs extrémités avec une chambre de combustion (2) partiellement définie par la surface inférieure (1b) de la culasse (1), dans lequel l'autre extrémité du passage d'admission (5) s'ouvre au niveau de ladite surface supérieure (1a),
caractérisé en ce que
l'autre extrémité du passage d'échappement (6) s'ouvre au niveau de ladite surface inférieure (1b) et est pourvue d'une surface de fixation à laquelle une tubulure d'échappement est fixée.

2. Moteur à combustion interne selon la revendication 1, caractérisé en ce que la culasse (1) est pourvue d'au moins une chemise de refroidissement (12a, 12b) pour faire circuler un réfrigérant à travers la culasse (1).

3. Moteur à combustion interne selon la revendication 2, caractérisé en ce que ladite ou chaque chemise de refroidissement (12a, 12b) comporte une ouverture d'entrée et une ouverture de sortie situées, respectivement, au niveau de la surface supérieure (1a) et/ou de la surface inférieure (1b).

4. Moteur à combustion interne selon au moins l'une des revendications 1 à 3, caractérisé en ce que deux chemises de refroidissement (12a, 12b) séparées sont prévues pour refroidir le côté d'échappement et le côté d'admission de la culasse (1) séparément, lesdites chemises de refroidissement (12a, 12b) s'étendant à travers la culasse (1) à partir d'un côté jusqu'au côté opposé de celle-ci.

5. Moteur à combustion interne selon la revendication 3 ou 4, caractérisé en ce que l'ouverture d'entrée de ladite ou de chaque chemise de refroidissement (12a, 12b) est disposée sur la surface inférieure (1b) et en communication avec une chemise de refroidissement du bloc-cylindres, tandis que l'ouverture de sortie est disposée sur la surface supérieure (1a) de la culasse (1).

6. Moteur à combustion interne selon au moins l'une des revendications 2 à 5, caractérisé par un couvre-culbuteurs (20) pourvu d'une chemise de refroidissement (26a, 26b) en communication avec la chemise de refroidissement de culasse (12a, 12b) au travers de l'ouverture de celle-ci formée dans la surface supérieure (1a) de la culasse (1).

7. Moteur à combustion interne selon au moins l'une des revendications 1 à 6, caractérisé en ce qu'un couvre-culbuteurs (20) ou en ce que ledit couvre-culbuteurs (20) est pourvu d'un passage d'alimentation en carburant (25) pour fournir du carburant à un dispositif d'injection de carburant (24).

8. Moteur à combustion interne selon la revendication 7, caractérisé en ce que le passage d'alimentation en carburant (25) et la chemise de refroidissement du couvre-culbuteurs (20) comportent des ouvertures de connexion (25a ; 26a, 26b) agencées au niveau d'une partie de rebord commune (21) du couvre-culbuteurs (20).

9. Moteur à combustion interne selon au moins l'une des revendications 1 à 8, caractérisé en ce qu'un ou ledit couvre-culbuteurs (30) comporte un passage d'admission (35) relié au passage d'admission (5) de la culasse (1), et un clapet de contrôle de culbutage et/ou de turbulence (31) est disposé dans ledit passage d'admission de couvre-culbuteurs (35) pour contrôler la configuration de circulation de la circulation d'air d'admission.

10. Moteur à combustion interne selon au moins l'une des revendications 7 à 9, caractérisé en ce que le dispositif d'injection de carburant (24) comprend une soupape d'injection de carburant montée sur un ou ledit couvre-culbuteurs (30) pour pulvériser du carburant dans le passage d'admission (5, 35) formé, respectivement, dans la culasse (1) et le couvre-culbuteurs (30).

11. Moteur à combustion interne selon au moins l'une des revendications 1 à 10, caractérisé par une soupape d'admission (8) et une soupape d'échappement (9) pour contrôler la communication du passage d'admission (5) et du passage d'échappement (6) avec la chambre de combustion (2).

12. Moteur à combustion interne selon la revendication 11, caractérisé en ce que ladite soupape d'admission (8) et ladite soupape d'échappement (9) sont disposées dans un plan commun.

13. Moteur à combustion interne selon la revendication 11 ou 12, caractérisé en ce que ladite soupape d'admission (8) et ladite soupape d'échappement (9) sont inclinées vers le même côté par rapport à un plan contenant l'axe d'alésage de cylindre longitudinal.

14. Moteur à combustion interne selon au moins l'une des revendications 1 à 13, caractérisé en ce que les ouvertures du passage d'admission (5) et du passage d'échappement (6), respectivement, sur la surface supérieure (1a) et la surface inférieure (1b), sont disposées sur des côtés opposés de la culasse (1) par rapport à un plan contenant l'axe d'alésage de cylindre longitudinal.

15. Moteur à combustion interne selon au moins l'une des revendications 1 à 14, caractérisé en ce qu'un conduit d'admission (52 ; 52' ; 52'') communiquant avec le passage d'admission (5) s'étend vers le haut à partir du passage d'admission (5) et est ensuite courbé vers le bas et relié à une chambre de compensation (54).

16. Moteur à combustion interne selon la revendication 15, caractérisé en ce que le conduit d'admission (52 ; 52') est courbé vers un côté de la culasse (1) opposé au passage d'échappement (6).

17. Moteur à combustion interne selon la revendication 15, caractérisé en ce que le conduit d'admission (52'') est courbé vers le même côté de la culasse (1) que le passage d'échappement (6) et s'étend au-dessus du couvre-culbuteurs (51).
